# EUROPÄISCHE PATENTSCHRIFT

(11) **EP 1 249 331 B1**
(45) Veröffentlichungstag und Bekanntmachung des Hinweises auf die Patenterteilung: **31.05.2006**
(21) Anmeldenummer: 02015151.0
(22) Anmeldetag: 24.08.1999
(51) Int. Cl.: B29C 47/90, B29C 47/92, B29C 47/22

(54) **Vorrichtung und Verfahren zur Herstellung von Kunststoffrohren**
Device and method for the production of plastics pipes
Dispositif et procédé pour la production de tubes en matière plastique

(30) Priorität: 22.09.1998 DE 19843340
(43) Veröffentlichungstag der Anmeldung: 16.10.2002
(62) Teilanmeldung aus: 99969371.6
(73) Patentinhaber: Egeplast Werner Strumann GmbH & Co. KG, 48268 Greven (DE)
(72) Erfinder: Ulrich, Herbert, 48282 Emsdetten (DE); Werner, Joachim, Dr., 46499 Hamminkeln (DE)
(74) Vertreter: Basfeld, Rainer

(56) Entgegenhaltungen:
- DE-A- 2 210 657
- DE-A- 3 521 321
- GB-A- 2 182 603
- US-A- 5 120 212
- US-A- 5 891 481

## Beschreibung

Die Erfindung bezieht sich auf eine Vorrichtung und ein verfahren zur Herstellung von Kunststoffrohren gemäß dem Oberbegriff des Hauptanspruches.

In Kunststoffrohre produzierenden Einrichtungen besteht das Problem, daß Rohre unterschiedlicher Außendurchmesser mit gleichzeitig unterschiedlichen Wanddicke hergestellt werden müssen. Im Stand der Technik ist es dabei erforderlich, daß entsprechend dem Außendurchmesser des Rohres und der gewünschten, üblicherweise in Abhängigkeit des Außendurchmessers genormten Wanddicke des Rohres entsprechende Werkzeuge ausgewechselt werden müssen. Dies bedingt ein Stillsetzen der Maschine, einen hohen Arbeitsaufwand für das Auswechseln der Werkzeuge und Verlust an Kunststoffmaterial, bis das neue Rohr wieder gezogen werden kann. Ein entsprechendes Ziehen des Rohres, um bei einem bestehenden Außendurchmesser ein Rohr geringerer Wandstärke herstellen zu können, verbietet sich deshalb, da die Molekülkette des Kunststoffes gereckt und damit orientiert wird, so daß dadurch die Festigkeit des Rohres negativ beeinflußt wird, der Schrumpf-und die Faltenbildung aber gefördert werden.

Aus der gattungsbildenden DE 24 12 818 ist eine Vorrichtung zum Kalibrieren eines aus einer Strangpresse austretenden Rohres aus thermoplastischem Kunststoff bekannt, wobei bei dieser bekannten Anordnung in Produktionsrichtung des Rohres gesehen, Kalibrierlamellen aufeinanderfolgend angeordnet sind. Jede Kalibrierlamelle weist einen Kalibrierdurchlaß auf, der für alle aufeinanderfolgenden Kalibrierlamellen gleich und unveränderbar ist. Jede Kalibrierlamelle arbeitet mit einem nach oben abhebbaren Lamellensegment zusammen, das während der Anlaufphase der Produktion abgehoben werden kann, so daß das Einlegen des den Extruder bzw. den Rohrkopf verlassenden Rohres in den Kalibrierdurchlaß erleichtert wird. Eine Variation des Rohrdurchmessers während des Produktionsverfahrens ist hier nicht möglich und nicht nahegelegt.

Die US 5,891,481 offenbart eine Kalibrierstation, bei der geringfügige Kalibriereinstellungen dadurch vorgenommen werden können, daß einzelne offene Kalibrierringe geringfügig in ihrem Durchmesser verändert werden können. Bei dieser Anordnung ist allerdings keine Variation von Rohraußendimensionen über Normdimensionen hinweg erreichbar. Durch die Veränderung des Durchmessers der Kalibrierringe kann lediglich dem Schrumpfverhalten entgegengewirkt werden. Dafür ist die relativ geringe Verstellmöglichkeit der Kalibrierringe vollkommen ausreichend.

Aus der US 5,120,212 ist eine Zentriervorrichtung für einen Rohrextrusionskopf bekannt, die bei Rohrextrusionsdüsen mit herkömmlichen radialen Zentrierschrauben eine vollautomatische Nachzentrierung in Abhängigkeit von einer fortlaufend durchgeführten Messung der Wanddicke ermöglicht. Die in dieser Druckschrift offenbarte Vorrichtung umfasst einen Rohrextrusionskopf, in dem ein ringförmiger Düsenspalt zum Extrudieren eines Rohrs vorhanden ist. Das extrudierte Rohr läuft unmittelbar nach dem Verlassen des Düsenspalts in eine Katibrierhutse mit einem an sich bekannten Vakuumbad ein. Ferner ist ein motorbetriebenes Schraubgerät derart um die **Extrusionsachse schwenkbar und radial verstellbar gelagert,** daß es mit jeder der Zentrierschrauben für das radiale Verstellen der Rohrextrusionsdüsen in Eingriff gebracht werden kann. Die Stellantriebe und der Antriebsmotor des Schraubwerkzeugs werden von einer Rechen- und Steuereinheit in Abhängigkeit von den von einem Ultraschall-Messgerät an mehreren Umfangsstellen des Rohres gemessenen Wanddickenunterschieden.angesteuert. Dadurch kann eine automatische Zentrierung in einem geschlossenen Regelkreis erreicht werden. Eine Änderung der Rohrdimensionen über Normdimensionen hinweg ist während der Produktionsphase allerdings nicht möglich.

Der Erfindung liegt die Aufgabe zugrunde, eine Vorrichtung zu schaffen, um während der Produktionsphase des Rohres ohne Unterbrechung des Produktionsganges eine vollautomatisch gesteuerte Umstellung zwischen mehreren Kunststoffrohrdimensionen im kontinuierlichen Extrusionsprozeß zu erreichen, wobei der Außendurchmesser und die Rohrwanddicke entsprechend den Kundenwünschen bzw. der Normung aufeinander abgestimmt sind.

Diese der Erfindung zugrundeliegende Aufgabe wird durch die Lehre des Patentanspruches 1 und der Lehre des Verfahrensanspruches 2 gelöst.

Der schon vordimensionierte Massestrang kann gemäß der Erfindung in eine Kalibrierstation eintreten, in der unterschiedliche Rohrdimensionen einstellbar sind.

Ein Ausführungsbeispiel der Erfindung wird nachfolgend anhand der Zeichnungen erläutert. Die Zeichnungen zeigen dabei in
- Fig. 1: eine Gesamtansicht einer Produktionseinrichtung, in
- Fig. 2: in Produktionsrichtung gesehen einen Schnitt durch einen Kalibrierkopf, in
- Fig. 3: im Schnitt gemäß der Linie 3 - 3 in Fig. 2 die hintereinander angeordneten Lamellenkränze und in
- Fig. 4: eine abgeänderte Ausführungsform.

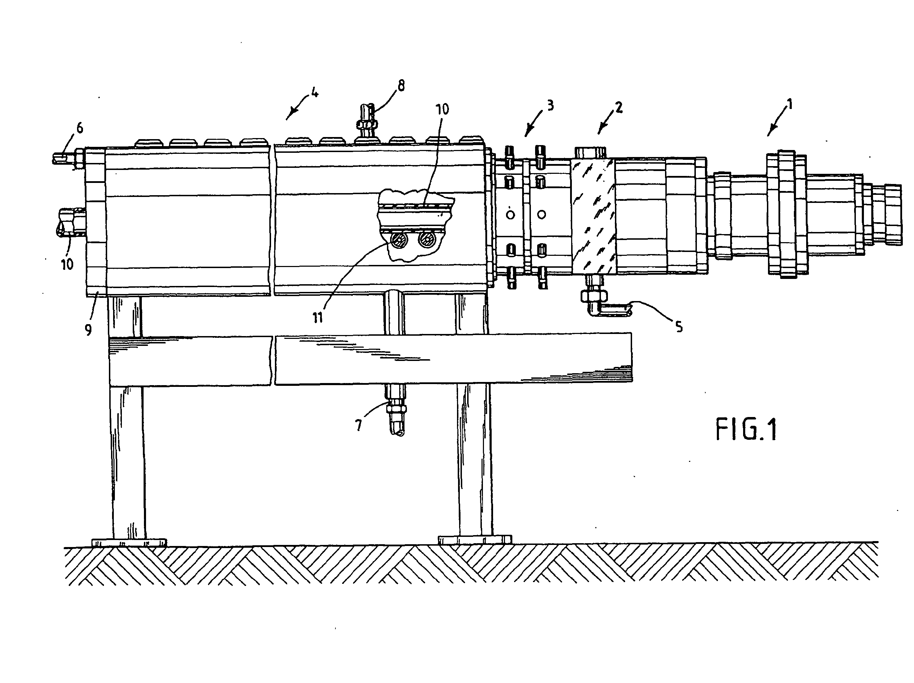

In Fig. 1 ist ein verstellbarer Rohrkopf erkennbar, der in Produktionsrichtung gesehen an einen in der Zeichnung nicht dargestellten Extruder anschließt. An den verstellbaren Rohrkopf 1 schließt sich eine Vakuum-Saugglocke 2 an, die mit einem Vakuumanschluß 5 ausgerüstet ist, in der Meßvorrichtungen vorgesehen sind, die in Abhängigkeit des gewünschten Rohraußendurchmessers, das in der Saugglocke herrschende Vakuum einstellen, so daß dadurch der rohrförmige Schmelzestrom auf den gewünschten Außendurchmesser eingestellt wird, d. h. aufgesaugt wird, wobei in der Vakuum-Saugglocke 2 bereits eine Vorkühlung des Schmelzestranges erfolgen kann. In der Vakuum-Saugglocke 2 kann in Verbindung mit dem verstellbaren Rohrkopf eine genaue Rohrwanddicke eingestellt werden, wobei die Rohrwanddicke in Abhängigkeit des Außendurchmessers des Rohres variiert werden kann.

An die Vakuum-Saugglocke 2 schließt sich eine Kalibrierstation 3 an. Hier erfolgt durch eine mechanische Zentralverstellung das genaue Kalibrieren des Außendurchmessers des Schmelzestranges und des schon teilweise ausgehärteten Rohres, wobei diese Kalibrierstation für alle in Frage kommenden Kunststoffe einsetzbar ist. In dieser Kalibrierstation können mehrere Dimensionen auch mit den unterschiedlichen Wanddecken eingestellt werden.

In einem sich in Produktionsrichtung gesehen daran anschließenden Vakuum-Kalibrierbad 4 erfolgt dann das Auskühlen und Aushärten des Kunststoffrohres durch Sprühwasser, wobei in der Zeichnung ein Wasserzulauf 6 und ein Wasserabfluß 7 erkennbar ist. Weiterhin schließt an das Vakuum-Kalibrierbad 4 ein Vakuumanschluß 8 an und das sich in dem Vakuum-Kalibrierbad 4 befindende Rohr 10 läuft über Stützrollen 11, die auch als Kalibrierrollen bezeichnet werden können und sich auf den gewünschten Rohrdurchmesser einstellen lassen. Die Oberfläche des Rohres 10 ist relativ hart und das Rohr 10 verläßt das Vakuum-Kalibrierbad 4 durch eine Vakuumabdichtung 9, die sich entweder selbständig auf den Rohrdurchmesser einstellt oder in Abhängigkeit der eingestellten Rohrdimensionen in derKalibrierstation 3 und/oder im Vakuum-Kalibrierbad 4 eingestellt wird. In der Vakuumabdichtung 9 können Formrollen angeordnet sein, die hydraulisch oder durch mechanische Federn betätigt werden, wobei gleichzeitig hier in den Durchlauf des Rohres Wasser zur Schmierung und Abdichtung eingeführt werden kann.

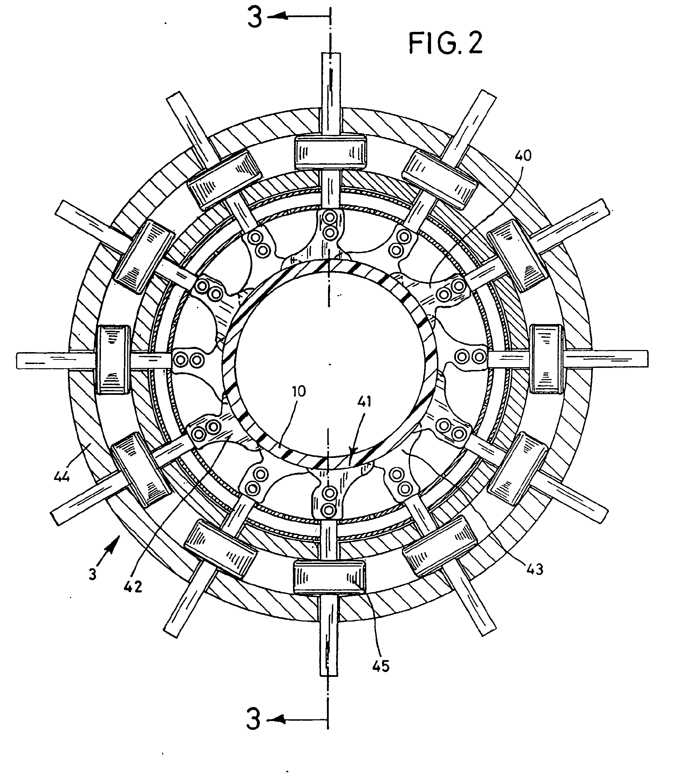

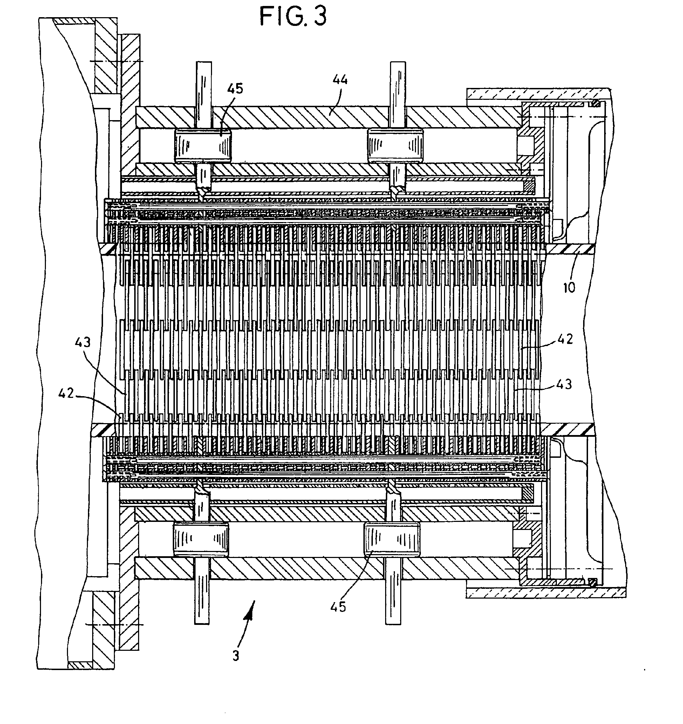

Die Fig. 2 und 3 zeigen Schnitte durch eine Ausführungsform der Kalibrierstation 3. Es ist erkennbar, daß innerhalb der Außenwandung 44 der Kalibrierstation eine Vielzahl von Lamellen 40 angeordnet ist, die über den Umfang des Rohres 10 verteilt an der Rohraußenwandung des Rohres 10 anliegen. Die anliegende Kante 41 jeder Lamelle 40 weist dabei eine Rundung auf, die dem größtmöglichen Außendurchmesser des Rohres 10 entspricht. Aus Fig. 2 und Fig. 3 ist erkennbar, daß eine Vielzahl von Lamellenkränzen 42 und 43 hintereinander in Produktionsrichtung des Rohres gesehen angeordnet sind.

Bei der Ausführungsform gemäß Fig. 2 sind Stellmotore 45 vorgesehen, die gemeinsam gesteuert ein gemeinsames Verstellen aller Lamellenkränze bewirken, wobei auch hier die Verstellung der Stellmotore 45 zentral gesteuert mit der entsprechenden Steuerung in der Sauggruppe 2 und dem Kalibrierbad 4 erfolgen kann.

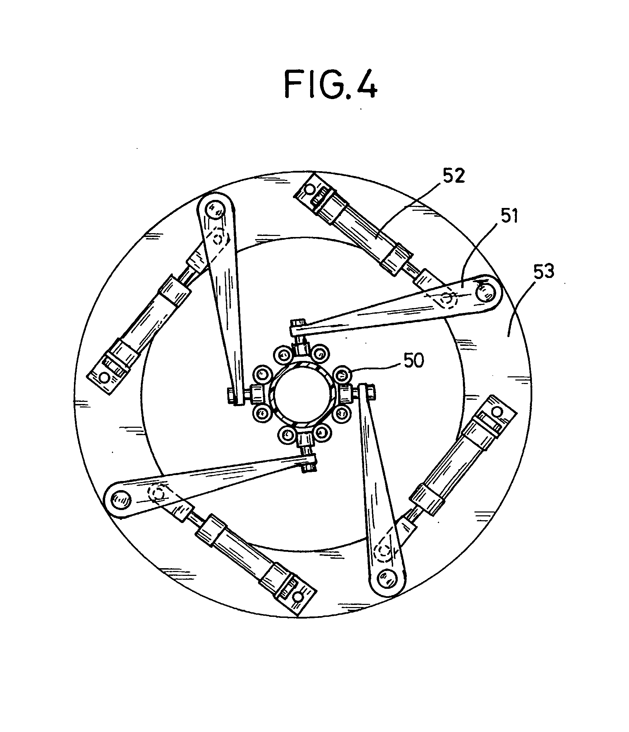

Fig. 4 zeigt eine Ausführungsform, bei der eine Vielzahl von Einzelrollen 50 an der Außenwand des herzustellenden Rohres anliegen, wobei die Rollen von Hebel 51 getragen werden, die über Stellvorrichtungen beweglich sind, so daß dadurch der gewünschte Innendurchmesser des Rollenkreises eingestellt werden kann. Die Stellvorrichtungen 52 und die Hebel 51 sind an einem Stellrad 53 angeordnet, daß über eine motorische Einrichtung umlaufend bewegt werden kann.

## Patentansprüche

1. Vorrichtung zur Herstellung von Kunststoffrohren mit einem Extruder, einem sich in Produktionsrichtung an den Extruder anschließenden Rohrkopf (1), dessen Massespalt während der Produktionsphase verstellbar ist, und einer Kalibrierstation (3), in der Kalibrierwerkzeuge an der Außenwandung des Rohres (10) anliegen, **dadurch gekennzeichnet, dass**
- sich an den Ausgang des Rohrkopfes (1) eine auf die Außenseite des noch nicht ausgehärteten Rohres (10) wirkende Vakuum-Saugglocke (2) anschließt, in der der Massestrangdurchmesser durch Einstellung des Vakuums gesteuert verändert werden kann,
- während der Produktionsphase mittels der Kalibrierwerkzeuge in der sich an die Vakuum-Saugglocke (2) anschließenden Kalibrierstation (3) unterschiedliche Rohrdurchmesser einstellbar sind,
- ein sich an die Kalibrierstation (3) anschließendes Vakuum-Kalibrierbad (4) vorgesehen ist, in dem das Rohr (10) abgekühlt und ausgehärtet werden kann, wobei das Vakuum-Kalibrierbad (4) einen Vakuum-Kalibrierbadauslaß aufweist, der mit einer sich selbsttätig auf den Rohrdurchmesser einstellenden Vakuumabdichtung (9) versehen ist.

2. Verfahren zur Herstellung von Kunststoffrohren mit einem Extruder, einem sich in Produktionsrichtung an den Extruder anschließenden Rohrkopf (1), einer Vakuum-Saugglocke (2), die sich an den Ausgang des Rohrkopfes (1) anschließt, und einer Kalibrierstation (3), in der Kalibrierwerkzeuge an die Außenwandung des Rohres (10) anlegbar sind, wobei:
- der Massespalt des Rohrkopfes (1) während der Produktionsphase verstellt wird,
- in der Vakuum-Saugglocke (2) der Massestrangdurchmesser durch Einstellen des Vakuums gesteuert verändert wird,
- in der Kalibrierstation (3) während der Produktionsphase unterschiedliche Rohrdurchmesser eingestellt werden
- in einem sich an die Kalibrierstation(3) anschließenden Vakuum-Kalibrierbad (4) das Rohr (10) abgekühlt und ausgehärtet wird.

## Claims

1. Device for the production of plastics pipes with an extruder, a pipe die head (1), which adjoins the extruder in the direction of production and the melt gap of which can be adjusted during the production phase, and a calibrating station (3), in which calibrating dies lie against the outer wall of the pipe (10), **characterized in that**
- the outlet of the pipe die head (1) is adjoined by a vacuum suction bell (2), which acts on the outer side of the not yet cured pipe (10) and in which the diameter of the melt strand can be changed in a controlled manner by setting the vacuum,
- different pipe diameters can be set during the production phase by means of the calibrating dies in the calibrating station (3) adjoining the vacuum suction bell (2),
- a vacuum calibrating bath (4) is provided, which adjoins the calibrating station (3) and in which the pipe (10) can be cooled and cured, the vacuum calibrating bath (4) having a vacuum calibrating bath outlet, which is provided with a vacuum seal (9), which sets itself automatically to the pipe diameter.

2. Method for the production of plastics pipes with an extruder, a pipe die head (1), which adjoins the extruder in the direction of production, a vacuum suction bell (2), which adjoins the outlet of the pipe die head (1), and a calibrating station (3), in which calibrating dies can be brought to bear against the outer wall of the pipe (10), in which method:
- the melt gap of the pipe die head (1) is adjusted during the production phase,
- the diameter of the melt strand is changed in a controlled manner by setting the vacuum in the vacuum suction bell (2),
- different pipe diameters are set in the calibrating station (3) during the production phase,
- the pipe (10) is cooled and cured in a vacuum calibrating bath (4) adjoining the calibrating station (3).

## Revendications

1. Dispositif de fabrication de tubes en matière synthétique, qui présente une extrudeuse, une tête tubulaire (1) qui se raccorde à l'extrudeuse dans la direction de production et dont l'interstice pour la pâte peut être ajusté pendant la phase de production et un poste de calibrage (3) dans lequel des outils de calibrage sont placés contre la paroi extérieure du tube (10), **caractérisé en ce que** :
- une cloche (2) d'aspiration sous vide, qui agit sur le côté extérieur du tube (10) non encore durci et dans laquelle le diamètre du barreau de pâte peut être modifié de manière contrôlée par ajustement du vide, se raccorde à la sortie de la tête tubulaire (1),
- pendant la phase de production, différents diamètres de tubes peuvent être ajustés au moyen des outils de calibrage qui se raccordent à la cloche d'aspiration sous vide (2) dans le poste de calibrage (3),
- un bain de calibrage sous vide (4) qui se raccorde au poste de calibrage (3) est prévu, dans lequel le tube (10) peut être refroidi et durci, le bain (4) de calibrage sous vide présentant une sortie de bain de calibrage sous vide qui est dotée d'un joint d'étanchéité sous vide (9) qui s'ajuste automatiquement au diamètre du tube.

2. Procédé de fabrication de tubes en matière synthétique à l'aide d'une extrudeuse, d'une tête tubulaire (1) qui se raccorde à l'extrudeuse dans la direction de production, d'une cloche d'aspiration sous vide (2) qui se raccorde à la sortie de la tête tubulaire (1) et d'un poste de calibrage (3) dans lequel des outils de calibrage peuvent être placés sur la paroi extérieure du tube (10), et dans lequel :
- l'interstice pour la pâte de la tête tubulaire (1) est ajusté pendant la phase de production,
- le diamètre du barreau de pâte est modifié de façon contrôlée par réglage du vide dans la cloche d'aspiration sous vide (2),
- différents diamètres de tube peuvent être réglés dans le poste de calibrage (3) pendant la phase de production et
- le tube (10) est refroidi et durci dans un bain de calibrage sous vide (4) qui se raccorde au poste de calibrage (3).
